**Europäisches Patentamt**

**European Patent Office**

**Office européen des brevets**

(19)

(11) Publication number: **0 435 429 B1**

# EUROPEAN PATENT SPECIFICATION

(45) Date of publication of patent specification: **30.11.94**   (51) Int. Cl.⁵: **G01D 5/24**

(21) Application number: **90310941.1**

(22) Date of filing: **05.10.90**

(54) **Method and apparatus for simultaneous sensing of angular and axial position.**

(30) Priority: **10.10.89 US 419596**

(43) Date of publication of application:
**03.07.91 Bulletin 91/27**

(45) Publication of the grant of the patent:
**30.11.94 Bulletin 94/48**

(84) Designated Contracting States:
**CH DE GB LI SE**

(56) References cited:
**EP-A- 0 065 625**
**EP-A- 0 184 584**
**EP-A- 0 248 165**
**EP-A- 0 258 725**
**GB-A- 2 060 173**

(73) Proprietor: **MITUTOYO CORPORATION**
**Landic Mita Building 3-19,**
**Shiba 5-Chome**
**Minato-ku, Tokyo 108 (JP)**

(72) Inventor: **Andermo, Ingvar**
**8615 N.E. Juanita Drive**
**Kirkland, WA 98034 (US)**
Inventor: **Belmondo, Victor E.**
**14700 Tester Rd.**
**Snohomish, WA 98290 (US)**

(74) Representative: **Arthur, Bryan Edward et al**
**Withers & Rogers**
**4 Dyer's Buildings**
**Holborn**
**London EC1N 2JT (GB)**

## Description

The invention pertains to a method and apparatus for sensing angular and axial position.

In many applications it is desirable to know at a remote location the exact position of a collar on a shaft. Such applications include the automotive and aircraft industries or any other area where mechanical relationships of parts are of interest.

Several types of sensors have been developed for such applications. The simplest sensor would be a mechanical linkage from the part sought to be monitored to a dial. Such sensors become generally impractical where the area where the information is needed is a distance from the part being monitored.

To overcome the limitations of mechanical sensors many types of electrical sensors have been developed. Such sensors include potentiometer, magnetic pickups of various types, optical pickups, and capacitive pickups. In the common application of a servosystem the pickups are generally potentiometer or resolvers.

In these general applications the property being measured is angular position. In those cases where longitudinal position is sought to be sensed a mechanical linkage is often provided to convert the longitudinal position into an angular position. In some cases a sensor specially adapted to sense longitudinal position is provided.

In those applications where it is desired to determine both the angular and axial position of one part relative to another a combination of two sensors is generally used. As an alternative a single sensor has been proposed which may be altered in position to sense both factors.

In applications such as inside a drive train or engine the sensor must be capable of working this environment for extended periods of time at elevated temperatures and pressures. It is also desirable if the sensor can function as a bearing between the two parts. Accordingly there is a need for a sensor that can provide information about both the angular and axial relative position of two parts while functions as a bearing.

EP-A-65,625 discloses a method of capacitively sensing the relative position of two relatively rotatable parts (1, 2) comprising capacitively coupling an A.C. or pulsed input signal applied to a radially distributed set of transmitting electrodes on one of said parts to a radially distributed set of electrodes on another of said parts and analysing the resultant output signal.

In one aspect the invention provides a method as disclosed in EP-A-65,625 characterised in that said parts are relatively axially displaceable, said A.C. or pulsed input signal is applied to at least two sets of transmitting electrodes, said sets of transmitting electrodes being relatively displaced in the axial direction and there being a phase difference between the signals on the different sets of transmitting electrodes, and the output signal is analyses to determine the relative axial position as well as the relative angular orientation of the two parts.

EP-A-65,625 also discloses an apparatus for sensing the relative angular position of two relatively rotatable parts comprising generating means arranged to apply an A.C. or pulsed input signal to a radially distributed set of transmitting electrodes on one of said parts, a radially distributed set of electrodes on another of said parts and capacitively coupled to said set of transmitting electrodes to generate an output signal and analysing means connected to said electrodes on said other part and arranged to derive an indication of said relative angular position.

In another aspect, the invention provides an apparatus as disclosed in EP-A-65,625 characterised in that said parts are relatively axially displaceable, said A.C. or pulsed input signal is applied to at least two sets of transmitting electrodes, said transmitting electrodes being relatively displaced in the axial direction and the generating means including means for applying signals of different phase to the respective sets of transmitting electrodes, and said analysing means is arranged to derive from said output signal an indication of the relative axial position as well as the relative angular orientation of the two parts.

Preferred features are defined in the dependent claims.

In the apparatus of the present invention there is no need to reposition the sensor to measure the separate factors. The sensor is capable of operating in motors and drivetrains. The sensor is also capable of functioning as a bearing while acting as a sensor.

With the apparatus and method of this invention it is possible to sense both angular and axial position with the same elements. Furthermore, in a preferred embodiment the angular and axial sensing can be done in a Fine and Course mode for each, whereby it is possible to get absolute indication of position over a very large range, expressed in fine resolution (accuracy) increments. It is practically possible to dimension the encoder according to a preferred embodiment of this invention to resolve for instance 1000 increments within each Fine wavelength, and have a Coarse range that is 100 times the Fine wavelength, giving a total range/resolution for each direction that is 100,000. The result is a two axis encoder that has a capability to resolve 100,000*100,000 position points, i.e. 10,000 million resolution points, both directions combined.

In a preferred embodiment the sensor includes a plurality of electrodes attached to the outer circumference of the shaft. These electrodes are insulated from one another and the shaft. Electrical connections are provided to the set electrodes. A second set of electrodes are provided on the inner surface of the collar. Optionally, electrical connections may be provided to this second set of electrodes. An electronic package is provided to provide proper electrical signals to each set of electrodes and to sense the output from the appropriate set of electrodes. The electronic package is further capable of multiplexing the signals and decoding the signals.

In operation of the above embodiment an alternating current signal is applied to one half of the electrodes on the shaft denominated as the transmitting electrodes. The other half of the electrodes on the shaft, the receiving electrodes, are connected to the input of an amplifier. The signal is conveyed from the transmitting electrodes to the receiving electrodes by capacitive coupling via the electrodes on the collar. The amount of signal conveyed is proportional to the position of the collar on the shaft. This relationship is fixed by the geometric configuration of the two sets of electrodes. This configuration may be varied to sense different amounts of rotation and to provide greater accuracy.

Preferred embodiments of the invention are described below by way of example only with reference to Figures 1 to 15 of the drawings.

Figure 1 is an environmental view of an embodiment of the invention.

Figure 2 is a plan view of the unwrapped electrodes of the embodiment of Figure 1.

Figure 3 is a schematic diagram of the transmitter electronic package of the embodiment of Figures 1 and 2.

Figure 4 is a representation of waveforms present in figure 3.

Figure 5 is a schematic diagram of the receiver electronic package of the embodiment of Figures 1 to 4.

Figure 6 is a plan view of the unwrapped electrodes of a second embodiment of the invention.

Figure 7 is a plan view of the unfolded electrode pattern of a third embodiment of the invention.

Figure 8 is a block diagram of the electronic package for the figure 7 embodiment.

Figure 9 is the electrode configuration of the figure 7 embodiment for axial measurement.

Figure 10 is the electrode configuration of the figure 7 embodiment for axial measurement on a different scale.

Figure 11 is the electrode configuration of the figure 7 embodiment for fine angular measurement.

Figure 12 is the electrode configuration of the figure 7 embodiment for coarse angular measurement.

Figure 13 is a detail of the switch network of figure 8.

Figure 14 is a detail of the Analogue Receiving Blocks of figure 8.

Figure 15 is a timing diagram illustrating the waveforms present in figure 8.

Figure 16 is a plan view of the unwrapped electrodes of a fourth embodiment of the invention.

Figure 17 is a block diagram of the electronics of the figure 16 embodiment set to measure axial displacements.

Figure 18 is a block diagram of the electronics of the figure 16 embodiment set to measure angular displacements.

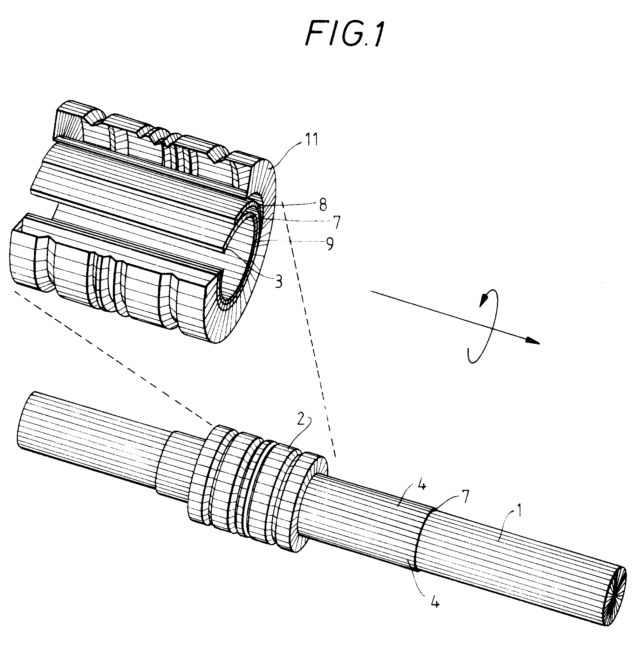

Figure 1 is an environmental view of one sensor in accordance with the invention. In this embodiment a slider 2 is movable relative to an axle 1. Slider 2 is movable both axially and angularly relative to axle 1. In many applications it is desirable to provide slider 2 with a bearing surface 3 on its inner circumference. Bearing surface 3 is selected from materials having both a low coefficient of friction and wearing properties. In addition bearing surface 3 should be electrically insulating. Polytetrafluoroethylene film has been found to be a suitable material for surface 3 but other materials having similar properties as outlined above could be substituted.

A series of electrodes 4 each having an electrical connection are located on the outer surface of axle 1. Electrodes 4 may be constructed by using a plastic film 7 with a copper coating which is etched by printed circuit technology to form any desired pattern. Common Flexible Printed Circuit material (FPC) can be used for films. The film 7 with attached electrodes 4 is then rolled around axle 1 and fixed with an adhesive.

Similarly, slider 2 is provided with a series of electrodes 8 on its inner circumference 9. Electrodes 8 may be formed of copper foil directly in the outer surface of bearing surface 3. This may be easily accomplished by attaching copper foil to bearing film material by use of a suitable adhesive. Undesired portions of the foil are then etched away. The resulting electrodes 8 may be formed in any desired pattern. The film with attached electrodes is then rolled and attached to collar 2. Electrodes 8 may be provided with electrical connections 11 in some applications.

In use it is apparent that electrodes 4 and 8 are capacitively coupled. By suitable selection of electrical signals and pickups either the angular or axial position of slider 2 on axle 1 may be determined.

Fundamental to understanding of the invention is the fact that the inducement of charge in a capacitor is proportional to the capacitance which in turn is proportional to the area of electrodes separated by a dielectric.

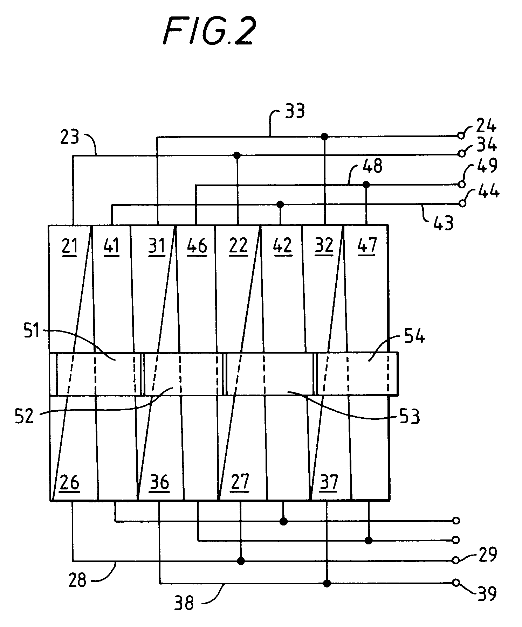

Figure 2 is a plan view of the electrodes attached to axle 1 before rolling. The pattern of electrodes illustrated is desirable for simultaneous measurement of limited angular position and axial position.

In this embodiment there are six sets of electrodes. Each set consists of two electrodes. The number of electrodes in each set will vary dependant upon the size of axle 1 and the degree of accuracy and angular range desired. This embodiment is designed for an angular range of approximately 40 degrees.

The first set of electrodes 21 and 22 are triangular in shape, they are electrically connected together by conductor 23 and are connected at terminal 24 (A1). The second set of electrodes 26 and 27 are triangular in shape, they are electrically connected together by conductor 28 and are connected at terminal 29 (A2). The third set of electrodes 31 and 32 are triangular in shape, they are electrically connected together by conductor 33 and are connected at terminal 34 (C1). The fourth set of electrodes 36 and 37 are triangular in shape, they are electrically connected together by conductor 38 and are connected at terminal 39 (C2). Electrodes 21, 22, 26, 27,31,32,36, and 38 all function as transmitters in this embodiment of the invention.

The fifth set of electrodes 41 and 42 are rectangular in shape, they are electrically connected together by conductor 43 and are connected at terminal 44 (B). The sixth set of electrodes 46 and 47 are rectangular in shape, they are electrically connected together by conductor 48 and are connected at terminal 49 (D). Electrodes 41, 42,46 and 47 all function as receivers in this embodiment of the invention.

The slider also has four electrodes 51,52,53 and 54, In this embodiment of the invention the slider electrodes are rectangular in shape and without electrical connections, Electrodes 51-54 are separate and electrically isolated. Electrodes 51-34 are capacitively coupled to the electrodes on axle 1.

To measure axial displacements transmitting electrodes 21,22,31 and 32 are all connected together. Similarly, transmitting electrodes 26,27,36 and 37 are connected together. The result is two sets of transmitting electrodes. A source of alternating current is connected between the two sets of electrodes this results on a charge being imposed on electrodes 21,22,31, and 32 that is 180 degrees out of phase with that imposed on electrodes 26,27,36, and 37. Similarly all receiving electrodes 41,42,46, and 47 are connected in parallel.

A single set of electrodes 21,26,41, and 51 will now be considered it being realized that the charges on each group of electrodes is identical in this configuration. Electrodes 21 and 26 divide a rectangular area by the diagonal split between them. The voltages on electrodes 21 and 26 in turn induce a charge in the adjacent capacitively coupled slider electrode 51. This charge will vary in magnitude dependant upon the position of slider 2 on axle 1 due to the diagonal split between electrodes 21 and 26. For example if slider 2 is on one end 56 of axle 1 the charge induced will predominantly that opposite of the charge on electrode 21. This is because the area of electrode 21 under electrode 51 is much larger than that of electrode 26. The opposite is true if slider 2 is on the opposite end 57 of axle 1. If slider 2 is in the middle of axle 1 the areas of electrodes 21 and 26 are equal this results in zero charge being induced in electrode 51 as the equal charges are 180 degrees out of phase and thus cancel. Finally, the charge on slider electrode 51 in turn induces a charge on electrode 41 which is also capacitively coupled to electrode 51. As a result the charge on electrode 41 will vary from a maximum in the positive direction when slider 2 is on one end of axle 1 through zero at the center position to a maximum in the negative direction when slider 2 is on the other end.

As the collar electrodes 51 - 54 all have equivalent positions relative to any axial electrode group, they all get the same signal potential. Therefore, we can in this working mode consider the collar electrodes equivalent to one ring electrode stretching all the way around the circumference. The signal on electrodes $21 + 22 + 31 + 32$ will be coupling to this collar electrode with a capacitance Cx1 that is proportional to the collar position in the transverse direction (the axial direction):

$$Cx1 = C1*x/L$$

where L is the length of the tapered pattern on the axle and C1 is the maximum coupling capacitance between electrodes $21 + 22 + 31 + 32$ and the collar electrodes. Similarly, the capacitance between the axle electrodes $26 + 27 + 36 + 37$ and the collar electrodes is proportional to the collar distance from the other end of the axle tapered patterns

$$Cx2 = C1*(1-x/L)$$

The capacitance from the collar electrodes to the receiving plates $41 + 42 + 46 + 47$ is constant, independent of the collar position relative to the axle.

Lets design its value with C2.

When now the electrodes 21 + 22 + 31 + 32 are fed with AC signal with opposite polarity to electrodes 26 + 27 + 36 + 37 we will get a no-load voltage on the collar electrodes that is

$$U = V * Cx1/(Cx1 + Cx2) = V * x/L$$

and a source impedance of Cx1 + Cx2 = C1
V is the signal amplitude from the signal source (the electronics), assuming a low impedance signal source.With the collar capacitance to electrodes 41 + 42 + 46 + 47 as a load we will get a charge transfer to the charge amplifiers in the electronic unit that is

$$Q1 = V * x/L * C1*C2/(C1 + C2)$$

In the actual circuit, the electrodes 21 + 22 + 31 + 32 are first fed with the full available signal while electrodes 26 + 27 + 36 + 37 are held at ground potential and the above described charge is transferred to the receiver electronics. Then the electrodes 26 + 27 + 36 + 37 are fed with the full signal while 21 + 22 + 31 + 32 are held at ground potential. The received charge will then be

$$G2 = V * (1\text{-}x/L) * C1*C2/(C1 + C2)$$

It is to be noticed that when the electrodes are connected in the above-described configuration there is no influence on the output signal by rotation of the collar because all the collar electrodes have the same potential, independently of the angular position.

To measure angular displacements the connections to the electrodes are rearranged. In this embodiment that function is accomplished by the phasing of signals applied to the electrode as described below with the description of the multiplexing system of the invention.

Returning to figure 2, the electrodes are described as connected to measure angular displacements. Electrodes 21 and 22 are connected in parallel with electrodes 26 and 27 to form two rectangular transmitting electrodes and are connected to a source of alternating current. Similarly, electrodes 31 and 32 are connected in parallel with electrodes 36 and 37 to form a second set of rectangular transmitting electrodes. Electrodes 21,32,36 and 37 are connected to a source of alternating current that is 180 degrees out of phase with that connected to electrodes 21,22,26 and 27. This completes the connections to the transmitting portion of the angular displacement sensor.

Rectangular receiving electrodes 41 and 42 are connected to the + input of a differential amplifier. Rectangular receiving electrodes 46 and 47 are connected to the - input of the differential amplifier. This completes the receiving portion of the angular displacement sensor.

It shall be noted that the width of the slider electrodes 51-54 is selected to be twice the period length in angular direction, that which the rectangular pattern on the axle is repeated. Each 21/26. 31/36, etc electrode is considered as equal elements in determining that periodicity.

When the transducer is in the angular measuring mode, the tapered portion of electrodes 21/26, 31/36, etc. is disabled by feeding conjugant 21/26, 22/27, ...) tapered electrodes with the same signal. Every other of those electrodes are fed with opposite polarity signal, so 21/26 and 22/27 are fed with one signal from the oscillator, while electrodes 31/36 and 32/37 are fed with signal of opposite polarity, the receiving electrodes 41 + 42 and 46 + 47 are separately connected to the electronic unit, The collar electrodes placed so their dividing lines ore over the 41,46,42,47 electrodes while moving of the collar within the measuring range.

If we now look at the coupling between electrode 41 and electrode 21/26 and electrode 31/36, via collar electrodes 51 and 52, we get the dependence of angular rotation of the collar relative to the axle represented:

The capacitance between electrode-pair 21/26 and the collar electrode 51 is the constant over the angular measuring range. Name it C1. the capacitance between collar electrode 51 and axle electrode 41 will vary with the collar angle proportional to the angle:

$$Ca2 = C2*a/45$$

a is the rotation angle
C2 is the capacitance at full overlap
45 is the angle for full overlap in this embodiment
The charge transferred to the electronics by applying a voltage V on the 21/21 electrode pair will be

$$Q1 = V*C1*Ca2/(C1 + Ca2)$$

The capacitance between the electrode-pair 31/36 and the collar electrode 52 is also constant and the same as in the above case = C1. The capacitance between collar electrode 52 end axle electrode 41 will vary with the collar angle in opposite direction to the angle:

$$Ca3 = C2*(1\text{-}a/45)$$

the charge transferred to the electronics (charge amplifier input) when a voltage transient V is applied on the electrode-pair 31/36 will be:

Q2 = V*C1*Ca3/(C1 + Ca3)

The electronic unit is designed so that these two charges will be subtracted from each other, so we will get a resulting charge into the receiver charge input amplifier of

Q1 - Q2 = V*(C1*Ca2/(C1 + Ca2)-C1*Ca3/-(C1 + Ca3))

A further development of the above equations will show that the resulting charge will be

Qa = Q1-Q2 = V*C1*C2*(2a/45-1)/(C1 = C2)

which is a linear function of angle a within the measuring range (51/52 dividing line within the angular extension of electrode 41). Above relations are exactly the same for the charge transferred from electrodes 22/27 and 32/37 to the electrode 42. For the charge transferred to the electrodes 46 and 47 a similar relation holds, only that the polarity is changed relative to the above derivation. But this polarity change is taken care of in the receiver electronics by the inversion of the signals from the 46,47 inputs relative the 41/42 inputs.

From the above explanation it is clear that the angular displacement of the collar relative to the axle is giving variations in the capacitive coupling between transmitter and receiver electrodes, via the collar electrodes, that is indicative of the angular position.

It is also clear that when the electrodes on the axle are connected as indicated, there is no influence from axial movement of the collar, because the effective electrodes have no variation in area with the axial movement.

Additional compensation of either misalignment of slider 2 relative to axle 1 such as might be caused by wear or bearing clearance is also compensated for. This is accomplished by connecting all transmitting electrode in parallel and dividing this signal into the outputs for angular or axial displacements. Any signal that is the result of misalignment is thus divided out.

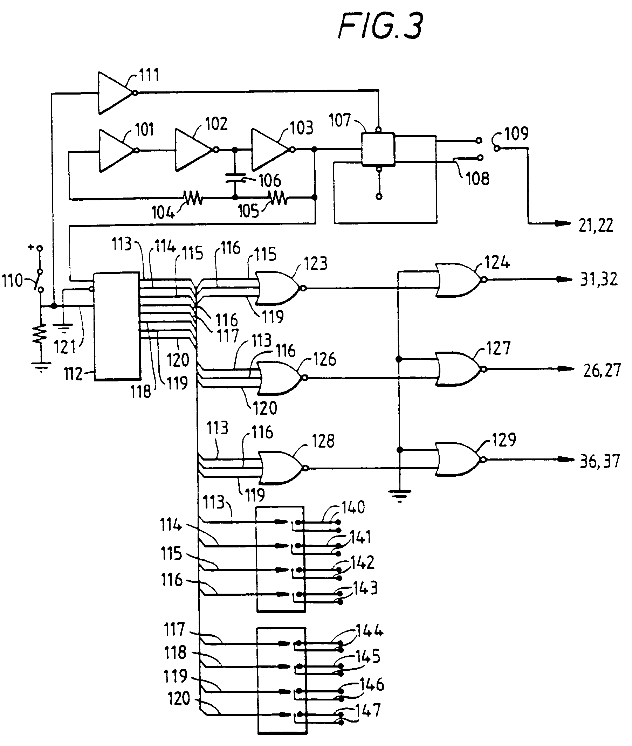

Figure 3 is a schematic diagram of the transmitter timing package of the invention. Three operational amplifiers 101,102 and 103 are connected to form an oscillator. The frequency is determined by the values of two resistors 104 and 105 and a capacitor 106. In this embodiment HC 04 operational amplifiers have been shown to be successful when 104 and 105 have values of 33,000 and 39,000 ohms respectively and 106 has a value of 100 pico farads to produce an output frequency of about 25khz.

The output of the oscillator is conveyed to the input of a flip-flop 107. Flip-flop 107 halves the output of the oscillator and allows timing. Output 108 of flip-flop 107 is applied directly to transmitting electrodes 21 and 22. A HC 74 integrated circuit has been found satisfactory for flip-flop 107. A reset switch 109 is connected to the reset input of flip-flop 107 by way of a buffer amplifier 111. The result is a pulse on electrodes 21 and 22 on every other pulse produced by the oscillator. A phase selection switch 110 is provided to allow selection of phase.

The output of the oscillator also is connected to the input of a decase counter 112. Decade counter is a five stage johnson decade counter with a built in code converter. In this embodiment a MC14017B decade counter made by Motorola has been found suitable although other equivalent counters could be substituted. Counter 112 provides an output at terminal 113 on input of the first pulse terminal 114 on the second and so through terminal 120 on the eighth pulse. The reset terminal 121 of counter 112 is further connected to the reset switch 109. When reset switch 109 is closed a voltage is imposed on the reset terminals of both flip-flop 107 and counter 112 ensuring that each of their cycles will begin on the leading edge of the next pulse from the oscillator.

Outputs 115,116 and 119 of counter 112 are connected to the input of a Nor gate 123. The output of Nor gate 123 is connected to the input of an invertor 124. Finally, the output of invertor 124 is connected to electrodes 31 and 32 of the encoder. The result is a pulse on electrodes 31 and 32 on each second, forth and seventh pulse produced by the oscillator.

Outputs 113,116 and 120 of counter 112 are connected to the input of a second Nor gate 126. The output of Nor gate 126 is connected to the input of an invertor 127. Finally, the output of invertor 127 is connected to electrodes 26 and 27 of the encoder. The result is a pulse on electrodes 26 and 27 on each first, forth and eighth pulse produced by the oscillator.

Outputs 113,116 and 119 of counter 112 are connected to the input of a third Nor gate 128. The output of Nor gate 128 is connected to the input of an invertor 129. Finally, the output of invertor 129 is connected to electrodes 36 and 37 of the encoder. The result is a pulse on electrodes 36 and 37 on each first, forth and seventh pulse produced by the oscillator.

Each output of counter 112 is also connected to an analog switch. In this embodiment two D8308A quad Monolithic spot switch manufactured by Siliconix has been found satisfactory. The result is that switch 140 is closed on the first pulse, 141 on the second pulse and so through switch 147 which is closed on the eighth pulse.

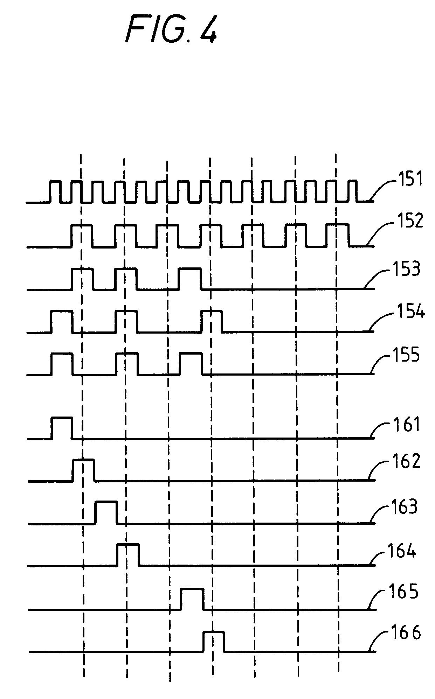

Figure 4 is a series of waveforms which illustrate the timing of the system. The first waveform 151 is the timing pulses of the oscillator. Next is the output 152 of flip-flop 107 which is applied to transmitting electrodes 21 and 22 which produces a pulse on every other oscillator pulse. Third, is the output 153 of invertor 124 which is applied to transmitter electrodes 31 and 32. This output is a pulse on each second, fourth, and seventh oscillator pulse. Forth, is the output 154 of invertor 127 which is applied to transmitter electrodes 26 and 27. This output is a pulse on each first, fourth, and eight oscillator pulse. Fifth, is the output 155 of invertor 129 which is applied to transmitter electrodes 36 and 37. This output is a pulse on each first, forth and seventh oscillator pulse.

Waveforms 161-166 are the periods during which switches 140-147 are closed. For example switch 140 is closed 161 during the period during which transmitting electrodes 26,27,36 and 37 are receiving signals. Similarly, switch 141 is closed 162 during the period in which transmitting electrodes 21,22,31 and 32 are receiving signals. These two switches 140,141 are thus closed when the encoder is configured to measure longitudinal displacements.

Switch 143 is closed 163 during the ground state at which time no transmitting electrode is receiving signals. Switch 144 is closed 164 during a period where all transmitting electrodes ire receiving a signal. These two switches 143 and 144 are used to produce a correction signal.

Switch 145 is closed during the period 165 when transmitting electrodes 31,32,36 and 37 are receiving a signal. Finally, switch 146 is closed during the period when transmitting electrodes 21,22,26 and 27 are receiving a signal, These two switches are thus closed when the encoder is configured to produce a angular displacement signal.

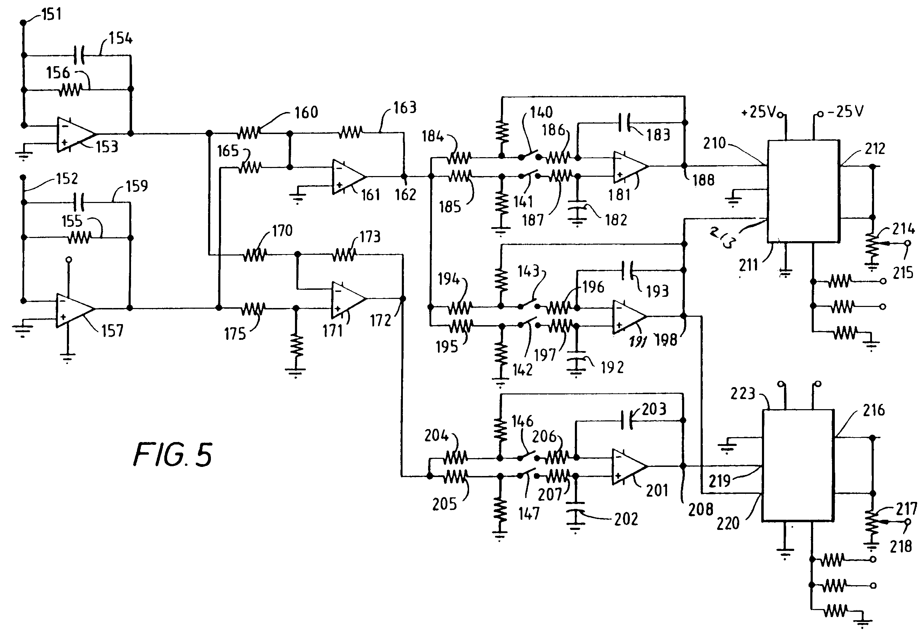

Figure 5 is a schematic diagram of the receiver of the invention. One input 151 is connected to the receiving electrodes 41 and 42 similarly receiving electrodes 46 and 47 are connected to input 152. Each input is connected to a charge amplifier. For example the charge amplifier connected to input 151 includes an operational amplifier 153 a capacitor 154 and a resistor 156. Operational amplifier 153 has one input connected to ground. A charge amplifier provides an output that is proportional to the ratio of the capacitance at input 151 and capacitor 154. In this embodiment a 347 operational amplifier has been found to be satisfactory when capacitor 154 is 20pf. A similar charge amplifier including an operational amplifier 157, capacitor 159 and resistance 155 is connected to input 152.

The outputs of the charge amplifiers are connected by way of 10k ohm resistors 160 and 165 to the - input of another operational amplifier 161. The + input is grounded. Amplifier 161 thus produces a signal at output 162 that is the sum of the signals outputted from amplifiers 153 and 157. A resistance 163 provides stability when selected to provide negative feedback. 10k ohms has been found satisfactory for 163.

The outputs of one charge amplifier is connected by way of 10k ohm resistor 170 to the - input of another operational amplifier 171. The + input is connected by way of resistor 175 to the other charge amplifier. Amplifier 171 thus produces a signal at output 172 that is the difference of the signals outputed by amplifiers 153 and 157. A resistance 173 provides stability. 10 K ohms has been found satisfactory for 173.

There are three demodulator sections in the receiver: consisting of the operational amplifiers 181, 191, 201 and surrounding components. The configurations of each section are identical. Two of the demodulators operate on the sum signal at terminal 162. The other demodulator operates on the difference signal at terminal 172.

The first demodulator includes an operational amplifier 181. Two integration capacitances 182 and 183 are connected to its inputs. Resistances 184,185,186 and 187 aid in isolating signals. Values of 22k ohms for 184 and 185 and 10k ohms for 186 and 187 have been found effective with use of a 347 operational amplifier. Switch 141 is connected in series with the + input of operational amplifier 181 and switch 140 is connected in series with the - input. As a result the first demodulator produces a negatively integrated signal at output 188 when a signal is applied to transmitting electrodes 26,27,36 and 37 when switch 140 is closed and a positively integrated signal at output 188 when a signal is applied to electrodes 21,22,31 and 32 when switch 141 is closed. The output at terminal 188 is thus the average of the signal transferred through plates 21+22+31+32 to plates 41+42-46-47 via the plates 51+52+53+54 on the collar, which signal is proportional to the transverse displacement of collar 2 on axle 1.

The second demodulator includes an operational amplifier 191. Two integration capacitances 192 and 193 are connected to its inputs. Resistances 194,195,196 and 197 aid in isolating signals and stabilizing DC levels. Values of 22k ohms for 194 and 195 and 10k ohms for 196 and 197 have been found effective with use of a 347 operational amplifier. Switch 142 is connected in series with the + input of operational amplifier 191 and switch 143 is connected in series with the - input. As a result the second demodulator produces a negatively integrated signal at output 198 when a signal is applied to all transmitting electrodes 21,22,31,32,26,27,36 and 37 when switch 143 is closed. When switch 142 is closed, the second demodulator produces a positive integrated output of the voltage out form 162, for the case of no signals connected to the transmitting plates, which serves to balance the output for existing DC signals in the preceding electronic circuits. The sum output at terminal 198 is thus representing the signal amplitude from the sensor, independent of the axial and angular movement. This signal is used to normalize the signals for angular and axial measurement and thereby make the measurements independent on variations of the input signal amplitude and variations of the gap between the plates on the axle and the plates on the collar.

The third demodulator includes an operational amplifier 201. Two integration capacitances 202 and 203 are connected to its inputs. Resistances 204,205,206 and 207 aid in isolating signals and stabilizing DC levels. Values of 22k ohms for 204 and 205 and 10k ohms for 206 and 207 have been found effective with use of a 347 operational amplifier. Switch 147 is connected in series with the + input of operational amplifier 201 and switch 146 is connected in series with the - input. As a result the third demodulator produces a negatively integrated signal at output 208 when a signal is applied to transmitting electrodes 31,32,36 and 37 when switch 146 is closed and then a positively integrated signal when a signal is applied to electrodes 21,22,26 and 27 when switch 147 is closed. The output at terminal 208 is thus proportional to the angular displacement of slider 2 on axle 1.

The result of the demodulation process is a longitudinal signal at point 188 and an angular signal at point 208 and finally, a correction signal at point 198. The longitudinal and angular signals must be divided by the correction signal to produce a corrected output. This is accomplished by use of two divider circuits. In this embodiment two internally trimmed integrated circuit dividers 211 and 223 were used. A circuit manufactured by Analog Devices under the part number AD535 has been found successful in this embodiment. The longitudinal signal at 188 is connected to the numerator input 210 of 211 and the correction signal at 198 to the denominator input 213. The product output 212 is connected to a trimmer potentiometer 214 and the output 215. Similarly, the angular signal at 208 is applied to the numerator input 219 of divider 223 and the correction signal at 198 to the denominator input 220. The product output 216 is in turn connected through a trimmer potentiometer 217 to output 218.

The signal at output 215 is a DC voltage which is proportional to the longitudinal displacement of slider 2 on axle 1. The signal at output 218 is also a DC voltage which is proportional to the angular displacement of slider 2 on axle 1. A variety of output devices may be connected to outputs 215 and 216 including but not limited to meters, oscilloscopes and a analog to digital converter if digital readout is desired.

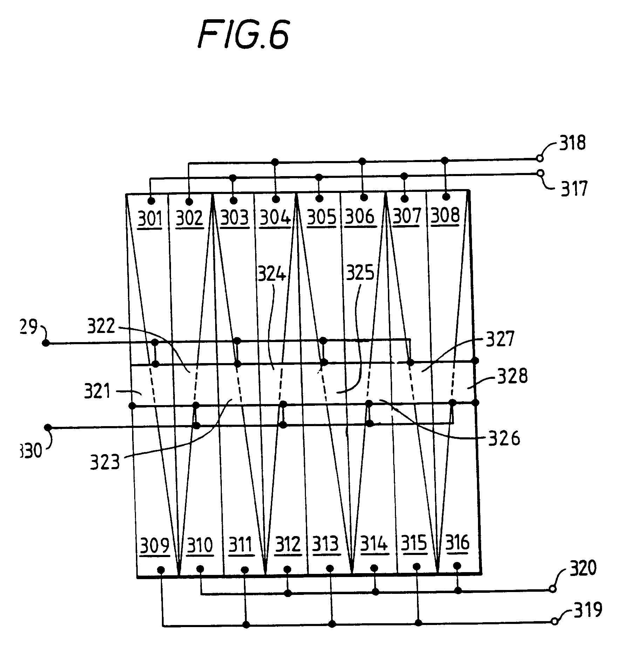

Figure 6 is a plan view of the encoder electrodes of a second embodiment of the invention. In this embodiment connections are required both to the collar and the axle. This embodiment has the advantage that the signal is stronger than that of the figure 2 embodiment as there is only one capacitance in series for each transmission path. The device is shown unrolled for clarity but in practice would be used as shown in Figure 1. In this embodiment there are 16 transmitting electrodes 301-316. Each transmitting electrode is triangular in shape as shown. Electrodes 301,303,305 and 307 are connected together to form group 317. Electrodes 302,304,306 and 308 are connected together to form group 318. Electrodes 309,311,313 and 315 are connected together to form group 319. Electrodes 310,312,314 and 316 are connected together to form group 320. This completes the transmitting electrodes.

There are 8 receiving electrodes 321-328 connected to collar 2. Each receiving electrode is rectangular. Electrodes 321,323,325 and 327 are connected to form group 329. Similarly, electrodes 322,324,326 and 328 are connected together to form group 330.

To measure axial displacements an alternating current signal having the value of cos wt is placed on the electrodes in groups 317 and 318. A second signal having the value of sin wt that is 90 degrees out of phase with the first signal is pieced on the electrodes in groups 319 and 320. The sum of the signals received on the electrodes in groups 329 and 330 will follow the equation x cos wt + j(1-x) sin wt where x is the axial displacement w is the angular velocity and t is time. This signal any easily be decoded by conventional electronic circuitry to isolate x.

The resulting signal will have a phase angle relative to the transmitted signals, that is

$$\text{alfa} = \text{arctg}(x/(1-x))$$

This phase angle is easily detected by conventional electronic circuitry. Alfa is proportional to x within <5%. The deviation from linearity is predictable and can easily be corrected in conventional electronic circuitry.

To measure angular displacements in alternating current signal having the value of cos wt is placed on the electrodes in groups 318 and 320. A second signal having the value of sin wt that is 90 degrees out of phase with the first signal is placed on the electrodes in groups 319 and 317. The difference of the signals received on the electrodes in groups 329 and 330 will follow the equation (1 +

(angle/45)) cos wt - j(angle/45) sin wt where x is the axial displacement w is the angular velocity and t is time. This signal may easily be decoded by conventional electronic circuitry to isolate the angle.

The resulting signal will have a phase angle relative to the transmitted signals, that is

alfa = arctg (x/(1-x))

This phase angle is easily detected by conventional electronic circuitry. Alfa is proportional to x within <5%. The deviation from linearity is predictable and can easily be corrected in conventional electronic circuitry.

The above signals may be multiplexed in the manner illustrated in the description of figures 4 and 5 to allow simultaneous measurement of both the axial and angular displacement.

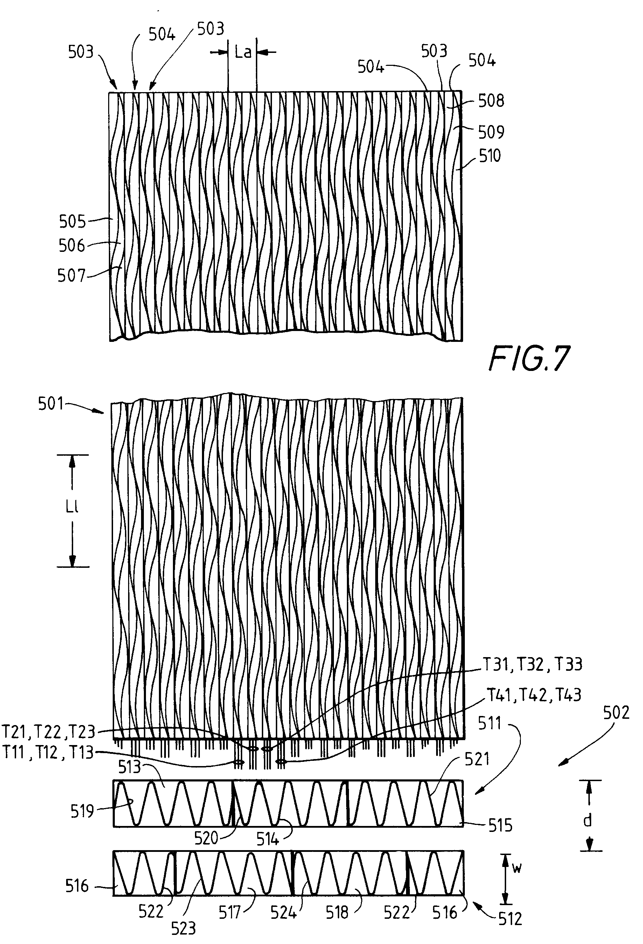

Figures 7 to Fig 16 illustrate a third embodiment of the invention, suited for measurement over extended range both in the linear and angular direction. Actually, with this embodiment, the linear measurement can be extended over any desired measurement range, with retained ability to resolve the finest increment of measurement. The angular range can be extended to the full 360 degree rotation of the hub, or even with counting of the revolutions, function over several revolutions. Provisions are also made for getting an absolute indication of position in both directions, in spite of the primary measurements being basically incremental in counting measurement periods as will be further explained hereinbelow.

Figure 7 is a plan view of the unfolded electrode pattern for this embodiment wherein 501 is the wrapped-out pattern for attachment to axle 1, and 502 is the wrapped-out pattern for attachment to collar 2. Axle pattern 501 includes a number of longitudinal sections 503 and 504, where each section has a constant tangential width and is extended along axle 1 on the surface of the axle. Sections 503 and 504 are alternating so every second section is of the same kind. Each section 503 is internally divided into three fields 505, 506, 507, in a way that forms a periodic pattern along the axle. Each section has an extension in tangential direction, that follows a sinusoidal function, with the three sections being phaseshifted relative to each other by 360/3 degrees. With L1 as the wavelength of the pattern within the sections 503, the functions can be expressed with following formulas:

$A(505) = A + B_*sin(2_*\pi_*x/L1)$
$A(506) = A + B_*sin(2_*\pi_*x/L1-2_*\pi/3)$
$A(507) = A + B_*sin(2_*\pi_*x/L1 + 2_*\pi/3)$

The dividing lines between subsections follow the

following expressions:

$P1(x) = K$
$P2(x) = K + A(505)$
$P3(x) = K + A(505) + A(506)$
$P4(x) = K + A(505) + A(506) + A(507) = K + 3_*A$

The value of the constant B is chosen to be a little less that A, enough for A-B to form a continuous conducting path for each subsection 505, 506, 507 along the pattern through the narrow portions. This path is not visible in Fig 7 due to scale limitations, but is apparent from above formulas, if for example $B = A_*0.9$ . Also, there is an insulation space between the subsections and the sections, which has not been included in above formulas. The effect of the insulation is trivial, not affecting the principle of this explanation.

Section 504 having subsections 508-510 is similar to sections 503 (505-507, but with a different wavelength L2. So the formulas for the subsections 508, 509, 510 will be:

$A(508) = A + B_*sin(2_*\pi_*x/L2)$
$A(509) = A + B_*sin(2_*\pi_*x/L2-2_*\pi/3)$
$A(510) = A + B_*sin(2_*\pi_*x/L2 + 2_*\pi/3)$

The wavelength L2 is related to L1 by the following formulas:

$L2_*N2 = L1_*N1 = Lc$
$N2 = N1 + 1$ (or $N2 = N1 - 1$)

Lc is the range over which absolute measurements can be made in the x direction, further to be explained later on in the description of this embodiment.

The distance La, over which the pattern of sections 503 and 504 becomes periodic in the tangential direction, is the wavelength for fine angular measurement. Furthermore, the connections to the electronics from the electrodes on the axle are done in two groups (T11, T12, T13, T21, T22, T23) and (T31, T32, T33, T41, T42, T43), so the electrodes can be fed in a manner that constitutes one period of signals over the full 360 degree circumference of the axle.

The pattern of electrodes for attachment to collar 2 includes two rings of electrodes 511 and 512. Ring 511 is divided into three sections 513, 514, 515. Ring 512 is also divided into three sections 516, 517, 518. Each section is in turn divided into two parts by a sinusoidal shaped insulation space 519 - 524. The insulation spaces are chosen to have a wavelength equal to the axle tangential wavelength La, expressed as an angle. The three sections on each ring 511 and 512 have their sinusoidal functions phaseshifted by 360/3 degrees, and between the two rings, the sections are offset by 180 degrees. The resulting electrode pattern on the collar thus contains 6 phases for Fine angular measurement, by utilizing the electrodes in the La wavelength pattern, and 6 phases for Coarse angular measurement by combining the electrodes in the $2*3$ sections of the electrode rings. Furthermore, the two rings have a width and distance between them, that is adapted to the axial wavelength L1 and L2 on the axle pattern, so they can function as receiver for that wavelength. The width w is preferably not more than half of L1 or L2 and the distance d between the rings is preferable an odd multiple of $(L1+L2)/4$. A practical dimensioning makes the width less than half of the mean value of L1 and L2, so the two rings can be placed at half the mean value of L1 and L2.

The connection of each of the electrodes 513-518 to the electronic unit is done with each of the electrodes on the collar brought out as a separate connection as on the axle pattern. The electrodes are given names for this description as follows:

The first ring 511,
first section 513 = R12, R15
second section 514 = R16, R13
third section 515 = R14, R11
The second ring 512,
first section 516 = R26, R23
second section 517 = R24, R21
third section 518 = R22, R25

Note that the second ring 512 has its sections offset relative to the first ring 511, so the numeration first, second, .... section is not quite corresponding.

On axle 1, the three electrodes 505-507 in each 503 section are connected to the corresponding electrodes in the other 503 sections over half of the circumference of the axle, making three connections T11, T12, T13 to the electronics. The remaining 503 sections are connected similarly forming three connections T31, T32, T33. The 504 sections are connected in a corresponding way making the terminals T21, T22, T23 from the first half of the axle circumference and T41, T42, T43 from the second half of the axle circumference.

In the electronic unit of the Figure 7 embodiment the terminals to the transducer are connected in several combinations through multiplexing, for achieving information about the relative position between axle and collar in both axial and angular direction, both Fine and Coarse measurement in both directions.

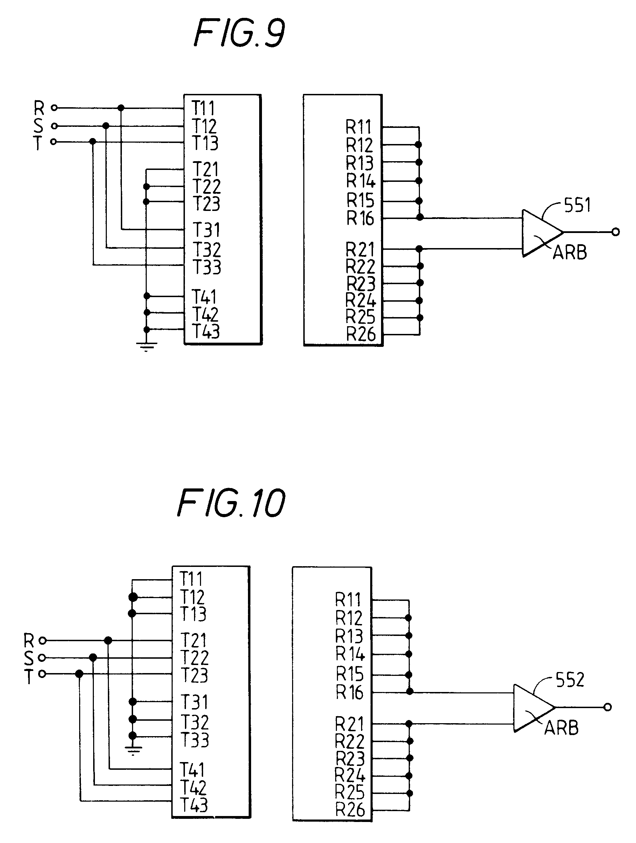

Figure 9 to 12 illustrate these four different modes of connection of electrodes to the electronics package.

Figure 9 shows the connection for axial measurement using the L1 wavelength scales. The terminals T11, T12, and T13 are parallel connected to terminals T31, T32, and T33 in numerical order, and the resulting three input terminals are connected to a three-phase output signal R,S,T in the electronics. The collar electrodes are connected with all electrodes from the first ring together, resulting in a ring-shaped electrode, the signal of which is connected to the negative terminal of the Analogue Receiving Block (ARB)551. The terminals from the second ring are similarly connected together to form a second ring electrode, the signal of which is connected to the positive terminal of the ARB 551.

Fig 10 illustrates the connection for axial measurement using the L2 wavelength scales. The terminals T21, T22, and T23 are parallel connected to terminals T41, T42, and T43 in numerical order, and the resulting three input terminals are connected to a three-phase output signal in the electronics. The collar electrodes are connected in the same manner as illustrated in figure 9 when measuring with wavelength L1.

The measurement with wavelength L1 gives the position within the Fine wavelength L1. The measurement with the wavelength L2 gives the some type of information, but because of the wavelength difference, there is a difference between these two measurements, proportional to the number of L1 (L2) wavelengths that the collar is displaced from the zero point along the axle. The information about Coarse position within the Coarse range Lc is obtained by subtracting the measurement value at L1 measurement from the measurement value at L2 measurement.

$$Xc = (x1-x2)*Lc/L1$$

Where Xc represents the coarse position, x1 and x2 represent the Fine position within a L1 wavelength, x2 the Fine position within a L2 wavelength.

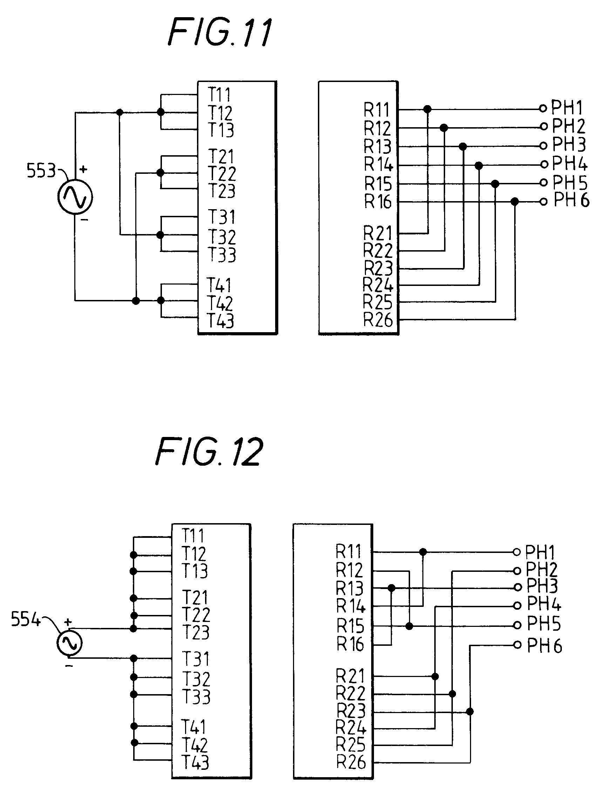

Figure 11 illustrates the connections for angular Fine measurement. The axle pattern is connected with sections 503 connected to the positive side of the signal generator 553, sections 504 connected to the negative side of the signal generator 553. Thereby a periodic field pattern is formed in the angular direction with angular wavelength La. This pattern is sensed by the collar electrodes by having the electrodes connected in a manner that constitutes a six-phase sensor with an effective wavelength equal to the axle angular wavelength La. Thus electrode terminal R11 is parallel with terminal R21 giving the first phase, electrode terminal R12 is parallel with terminal R22 giving the second phase and so on. By scanning over the six phases by a switch network, the receiver receives a signal, the envelope of which has a phase position that is proportional to the angular position of the collar relative to the axle within the angular wavelength La. The position within this wavelength can this way be measured to within a fraction of the wavelength, practically to within 1/100 to 1/1000 of the wavelength, limited by the accuracy of the pattern and the dimensioning of the electronic circuit.

Figure 12 illustrates the connections for the angular Coarse measurement. Here, the axle electrodes are grouped with all electrodes on one half of the circumference (T11, T12, T13, T21, T22, T23) connected to one side of the transmitter signal 554, the electrodes on the other half of axle 1 (T31, T32, T33, T41, T42, T43) connected to the other polarity of transmitter signal 554. On the receiver side (the collar), the connections are grouped for making a six-phase receiver with a wavelength equal to 360 degrees of the axle circumference. Thus electrode terminals R11 and R14 are connected together for forming the first receiver phase, electrode terminals R22 and R25 are connected together for forming the second receiver phase, electrode terminals R13 and R16 ....... third receiver phase, and so on according to Figure 12.

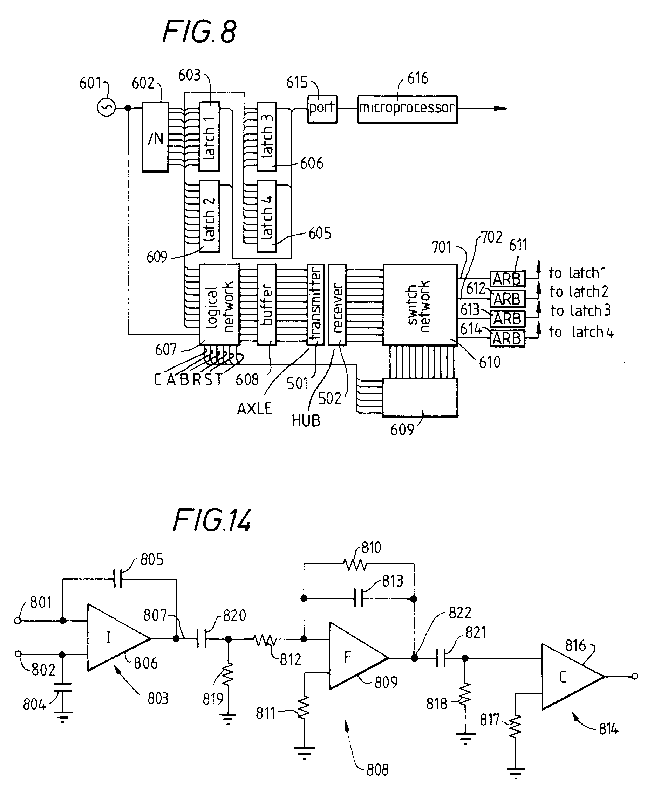

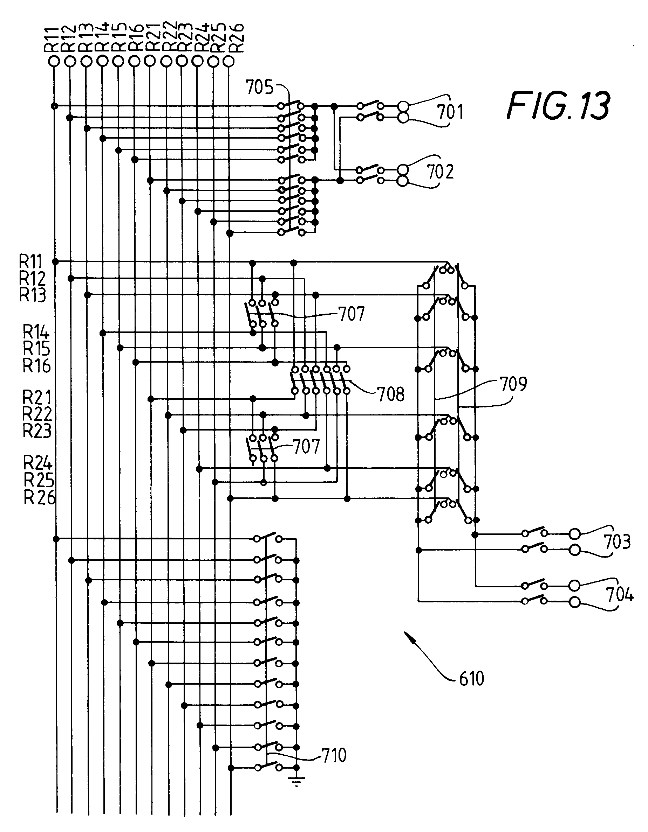

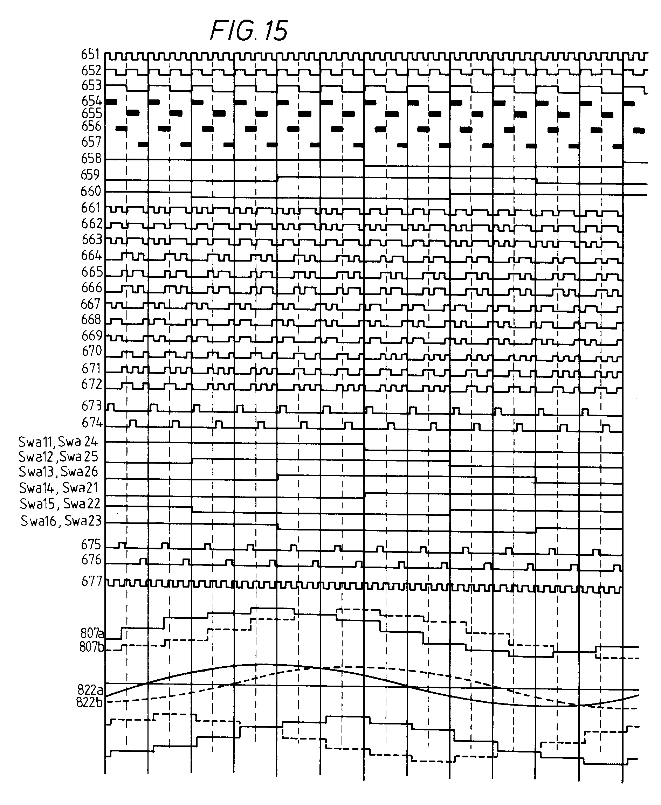

Figure 8 shows the block diagram for the total electronic system for achieving the above functions in a multiplexed fashion. The oscillator 601 is providing clock signals for the whole thing, as well as modulation signals for the transmitter. The clock signal is in unit 602 divided by a factor N, which in this embodiment is 96, but can be of higher value for higher resolution of the interpolation within the respective wavelengths. The outputs from the divider 602 are combined in the logical network 607 for giving transmitter signals T11, T12, T13, T21, T22, T23, T31, T32, T33, T41, T43 to the electrode groups on the axle. Those signals are amplified in the buffers 608 for driving the transducer with low impedance signals. The logical network 607 also provides input signals A, B, CLOCK, R, S, T, to the switch controller 609. The switch network 610 combines the output terminals from the receiver electrodes 513-518 (the collar) for the four measuring modes in a multiplexing fashion in sync with the corresponding multiplexing on the transmitter side. Both the transmitter multiplexing and the receiver multiplexing will be further described in connection with the timing diagram of figure 15 and the detailed diagram of the switch network of fig 13.

From switch network 610 we get four outputs, connected to four identical Analogue Receiving Blocks (ARB)611-614, one for each of the four functional modes of the sensor: ARB(611) for Fine1, ARB(612) for Fine2, ARB(613) for Angular-Fine, and ARB(614) for AngularCoarse. The outputs from these blocks (611 - 614) are square waves of the same frequency as the signals R,S,T (at zero moving speed), and the phase position of each of those square waves is essentially proportional to the mechanical position of collar 2 relative to the electrode pattern on axle 1 within the actual wavelength for each of the measuring modes. Thus, by connecting the 611 output to the triggering input of Latch1 603, we will from this latch get a reading of the output from the frequency divider 602, that is a digital representation of the axial position within the wavelength L1. Similarly, Latch2 604 will give a digital representation of the axial position within the wavelength L2, Latch3 606 will give a digital representation of angular position within a Fine angular wavelength La, and Latch 4 606 will give a digital representation of the coarse angular position within 360 degrees.

The outputs from the four latches 603-606 is read from the microprocessor 616 via the port 615 microprocessor 616 is programed by conventional means to calculate the actual absolute position and transform them to a suitable form to be received by external equipment. The methods for reading the data from the latches and combining them and converting them to the desired output format are well known by electrical engineers, familiar with microprocessors and their programming.

For example to obtain the axial measurement the microprocessor first reads D1 from latch1 and reads D2 from latch2. Next the microprocessor calculates x(coarse) position in fine increments by use of the following equation;

$$Nc = (D2-D1)_*N1$$

The microprocessor now knows the position within one N1 interval. To make the accurate absolute x position in fine increments the following equation is solved by iteration:

$$nF = N_*Dm + D1$$

by selecting N(=integer) so $\lceil nF-nC \rceil < dm_*3/8$ giving the axial position value out:

$$x = nf_*l1/dm.$$

Similarly,to obtain angular measurement the microprocessor first reads D3 from latch3 and reads D4 from latch4. Next the microprocessor calculates angular(coarse) position in fine increments by use of the following equation:

$$Ac = D4 + K$$

The microprocessor now knows the position within one interval. To make the accurate absolute angular position in fine increments the following equation is solved by iteration:

$Af = Na*Da + D3$

by selecting Na( = integer) so ¦ Af-Ac¦ < dm*3/8 giving the angular axial position in degrees value out:

$A = Af*360/dm + K$

The microprocessor then ends the process.

Fig 15 illustrates a number of important waveforms in the system according to fig 102. The "clock" 651 signal is produced by oscillator 601. Signals A 652 and B 653 are the first steps in binary dividing the clock signal to lower frequencies. By logical combination as illustrated in the description of the figure 3 embodiment of signals A 652 and B 653 the multiplexing sequence "xFine1 654, xFine2 655 , aFine 656 ,and a Coarse 657 " can be defined. The lines 654-657 with those four names in the timing diagram indicate with the horizontal bars the time intervals that are assigned for respective function.

The signals R 658, S 659 , and T 660 are the modulation signals for the three phases to the transmitter in the axial measuring mode, as well as the "scanning" signals for the receiver in the angular measuring mode. The signals to the transmitter electrodes T11 661, T12 662, T13 663, T21 664, T22 665, T23 666, T31 667, T32 668, T33 669, T41 670, T42 671, and T43 672 are assigned the same names in the timing diagram. As the transducer is capacitive, the information transfer occurs only in the voltage transitions. Therefore, in the design of this system we can concentrate our attention on the voltage transients in the signals.

The receiver switching is designed for letting through the transients that are coincident with the negative flanks of the clock signal (see Swx1 673, Swx2 674, SwaF 675, SwaC 676), while the positive flank is grounded (Sw8 677). Therefore only the part of the transmitter signals that are coincident with the negative flanks of the clock signal are of interest in designing the waveforms for the transmitters. With this in mind it is easy to see that the effect of the transmitter waveforms according to T11, T12, T13, T21, T22, T23, T31, T32, T33, T41, T42, T43 diagrams in fig 115 will be that the transmitter electrodes are multiplexed between the configurations according to figures 9 through 12.

Figure 13 is a detailed diagram of the Switch Network 610 from figure8. All the switch symbols represent CMOS switches, which can easily be integrated into a custom IC chip, whereby the great number of switches will not cause any problem for signal load or required space. In the intervals, when signal A is high the switches 705 are closed and the axial measurements are done. Switches 701 are activated during the Fine1 mode, with a closed interval that surrounds the negative transmission time of the clock signal. For safe functioning, this gate signal is created with a clock signal that is slightly offset relative to the original clock signal. This is easily done with a simple time delay network, familiar to an electrical engineer, skilled in the art of design of digital circuits.

Switches 702 are activated in the Fine2 mode and their gate signals Swx2 are designed to surround the negative transmission of the clock signal the same way as the 701 gate signal. This characteristic of surrounding the corresponding edge of the clock signal is also valid for the angular gate signals SwaF and SwaC (negative clock transmission) as well as the grounding clock signal Sw8 (positive clock transmissions).

The outputs 701 are two wires, in the block diagram represented by one wire. The same comments holds for each of the outputs 702, 703 and 704. Those two wires represent differential inputs to the Analogue Receiving Blocks 611, 612, 613, 614 respectively, as will be more apparent from figure 14, which is a detailed representation of a solution for those blocks,

In the angular measuring modes, the switches 707 and 708 make the appropriate interconnections between receiving electrodes for angularCoarse and angularFine modes respectively. Thus six receiving phases PH1....PH6 are created, and they are scanned by switches 709 for forming differential output signals for terminal pairs 703 and 704 for the angularFine resp angularCoarse measurements.the 707 switches are closed during the aCoarse intervals according to the timing diagram, and the 708 switches are closed during the aFine intervals. The SwaF and SwaC switches are closed around the appropriate negative clock transmissions intervals according to the timing diagram and we get the desired demodulation of the receiver signals into the appropriate ARB:s.

Surrounding the positive transmission intervals of the clock signal, the switches 710 are closed, controlled by the signal Sw8 as seen in the timing diagram. This will connect the charges in transmission during the positive clock transmission to groung.

Figure 14 illustrates a typical Analogue Receiving Block of the invention. The input signals 801 and 802 are connected to the inputs of a charge amplifier 803. Charge amplifier 803 includes two capacitors 804 and 805 and an operational amplifier 806. In this configuration the output at point 807 is proportional to the difference between the ratios of the capacitive loads at inputs 801 and 802 to the values of capacitances 805 and 804 respectively.

The outputs of charge amplifier 803 is connected to a low pass filter 808. Filter 808 in this embodiment is an active filter including an operational amplifier 809 and appropriate resistances 810 and 811 and 812 and capacitor 813. Design of active low pass filters is well established and no further elaboration is necessary. Low pass filter 808 functions as a phase detector.

The analogue receiving block consists of a charge amplifier 803, a low-pass filter 808 and a comparator 814. The charge amplifier inputs 801 and 802 are via the previous described switch network connected to the receiver electrodes in the transducer, which have a source impedance that is capacitive. Thus the voltage transients from the input of the transducer are transformed to voltage transients on the output of operational amplifier 806 with an amplitude that is proportional to the ratio of the coupling capacitance through the transducer to the feedback capacitors 805 and 804. For DC stabilization of the amplifier output there are also a resistor of very high value parallel to each of the capacitors 805 and 804. Those resistors are not shown in the figure 14.

The signal 807 on the output of charge amplifier 803 is shown in the timing diagram of figure 15 for two different positions of angular movement 807a and 807b. The phase position of this signal is proportional to the mechanical position of the collar electrode pattern relative to the axle electrode pattern.

The signal 807 is High pass filtered by the network 820-819, serving to eliminate any DC voltage existing on the amplifier output. The filter 808 consists of an operational amplifier 809 with connected resistors and capacitors, dimensioned to function as a low pass filter with the purpose of smoothing out the staircase waveform on signal 807 to be more continuous without any steep transients. The thus obtained waveform on output of the amplifier 809 is illustrated in fig 15. The waveform is illustrated for two angular positions under number 822a and 822b respectively. The location of the zero crossings of these waveforms represent the mechanical position.

The signal 822 is via the high-pass filter 821/818 transferred to the comparator circuit 814. It contains the comparator 816 with the resistors 817 and 818 connecting its input terminals to a suitably bias level. The output from comparator 816 will be a square wave with its flanks coincident with the zero crossings of the 822 signal. The square wave output from each of the four analogue receiving blocks 611-614 (fig 8) is then triggering each one its latch for getting a digital representation of the phaseshift and thereby the mechanical position for each channel.

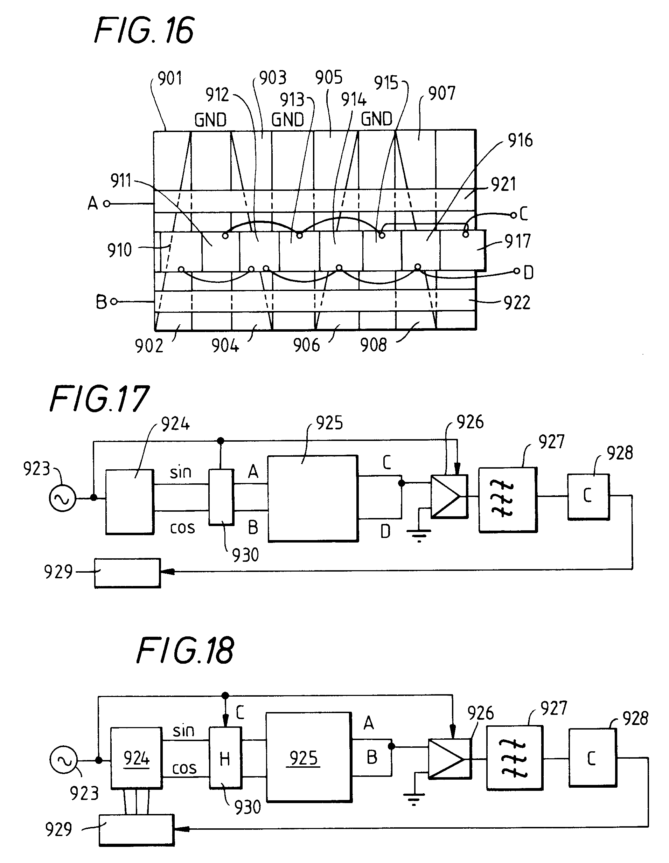

Fig 16 shows an embodiment of the invention where only the collar electrodes have galvanic connection to the electronics. On the axle 1 are freefloating electrodes 901-908 configured the same way as the transmitter electrodes in the figure 2 embodiment. Between the rectangular electrode-pairs (composed of two triangular conjugate electrodes) are grounded areas of equal width as the mentioned rectangular electrodes. On the collar are an array of rectangular electrodes 910-917 connected in two groups, every second to the same group, with output terminals C and D. Furthermore, on the collar are two ring electrodes,921 and 922, one on each side of the 910-917 array. Output terminals for these two ring electrodes are A and B.

Examining a single section it is apparent that the capacitance between ring electrode 921 and electrode 901 is equal to a constant times the axial displacement plus the distance between 921 and 910. The capacitance between ring electrode 922 and electrode 901 is equal to a constant times the axial displacement minus the distance between 921 and 910. The capacitance between ring electrode 921 and electrode 902 is equal to a constant times 1 minus the axial displacement minus the distance between 921 and 910. The capacitance between ring electrode 922 and electrode 902 is equal to a constant times 1 minus the axial displacement plus the distance between 921 and 910. The capacitance between electrode 910 and electrode 901 is equal to a constant times the axial displacement. Finally, the capacitance between electrode 910 and electrode 902 is equal to a constant times 1 minus the axial displacement. Solving for the total capacitance of the circuit we find that the signal delivered between C and D when a signal is inputed to A and B is equal to the signal at A times the axial displacement plus the distance between the ring and center electrodes divided by three added to the signal B times one minus the axial displacement minus the distance between the ring and center electrodes. Thus the signal is directly proportional to the axil displacement. Similar calculations apply to angular displacements.

For making axial measurements a circuit according to figure 17 can be used. Terminal A is fed with a signal sines(wt) while the B terminal is fed with cosines(wt). On terminals C + D in parallel we will then get a signal, whose phase position relative to the input signals is a one to one function of the axial position.

For making the angular position the same electronic circuit can be used, but the terminals have changed role as shown in figure 17. Terminals C and D are fed with cosine and sine signals respectively, and terminals A + B are in parallel connected to the receiver input of the electronics. The phase of the received signal will have a one to one relation to the angular position within a limited range (max 45 degrees for the illustrated embodiment with four periods of pattern around the circumference.

The electronics in figures 17 and 18 include an oscillator 923, a frequency divider and sin/cos synthesizer 924, a receiver amplifier 926, a filter 927 a comparator 928, and a latch 929. The transducer is 925. The Frequency divider divides the clock frequency by for instance 256, which number is dimensioning for the rate of resolution that can be achieved in the measurement. The sin and cos signal can be created by a digital sin or cos synthesizer from the binary data in the divider, but it is also possible to use quadrature square waves of the lowest frequency out from the divider if we have a suitable filtering in the filter 927 of the receiver side for extracting the fundamental component out of the received signal. In the modulator 930, the low frequency sin/cos signals (or quadrature square waves) are modulated by the clock frequency for obtaining a high frequency signal through the transducer. On the receiver side the received signal is demodulated and amplified in unit 926 and a low frequency waveform is obtained. The filter 927 extracts the harmonic component out of this signal and a clean signal with information of the position embedded in its phase angle relative to the transmitting LF signal is obtained. In the comparator 928, the zero-crossings of the sine wave is detected and a square wave is created. This square wave is triggering the latch 929 end a digital representation of the position is obtained.

The two functions represented by figures 17 and 18 can be multiplexed with the help of Cmos switches as described in other embodiments of the invention and simultaneous indication of both angular and axial position can be obtained. The multiplexing is preferable done at a high frequency relative to the LF modulation for the filters to be subject to a continuous signal of the detected frequency. this also means that the receiving section has to be separate for each measuring channel, but the transmitting section can be multiplexed.

The role of the transmitter and receiver plates can be reversed, with appropriate modification of the electronic unit. The information about position in both directions is contained in the capacitive couplings between the electrode group, which can be measured with various means, including standard capacitance measuring instruments, and the so obtained values can be utilized for calculating the mechanical position.

The shapes of the electrode plates can, within the invention idea, be varied for obtaining a desired nonlinear function for the output signals representing the position in the two directions, or for adapting to different signal processing means. The sinsoidial function for the capacitance that is desirable for measuring over long absolute range with the phase measurement method described in one of above embodiments, can be approximated with rectangular electrodes placed in a periodic pattern (an array) in the measurement direction. Also, the pattern on the collar can be extended in the axial direction over longer distance than illustrated above, with several rings of electrodes making a periodic pattern in the axial direction. In such a case, a multiphase receiver for the axial measurement direction is an option. On the other hand, the collar electrodes can also be simplified to be only one electrode ring also in the multiperiod version of figure 7.

The embodiments illustrated are for the purpose of example only. The invention is limited only by the subjoined claims.

## Claims

1. A method of capacitively sensing the relative position of two relatively rotatable parts (1, 2) comprising capacitively coupling an A.C. or pulsed input signal (152, 153, 154, 155) applied to a radially distributed set of transmitting electrodes (21, 22; 26, 27; 31, 32; 36, 37) on one of said parts to a radially distributed set of electrodes (51, 52, 53, 54) on another of said parts and analysing the resultant output signal (161, 162; 165, 166), <u>characterised in that</u> said parts (1, 2) are relatively axially displaceable, said A.C. or pulsed input signal (152, 153, 154, 155) is applied to at least two sets of transmitting electrodes (21, 22; 26, 27; 31, 32; 36, 37), said sets of transmitting electrodes being relatively displaced in the axial direction and there being a phase difference between the signals on the different sets of transmitting electrodes, and the output signal (161, 162, 165, 166) is analysed to determine the relative axial position as well as the relative angular orientation of the two parts.

2. A method as claimed in claim 1 wherein the width (in the tangential direction) of at least one set of transmitting electrodes (21, 22; 26, 27; 31, 32; 36, 37) varies with length (in the axial direction).

3. A method as claimed in claim 2 wherein said transmitting electrodes (21, 22; 26, 27; 31, 32; 36, 37) are substantially triangular in shape and adjacent pairs of transmitting electrodes form respective rectangular arrays.

4. A method as claimed in claim 1 wherein said width varies sinusoidally with said length.

5. A method as claimed in any preceding claim wherein the part (1) which carries said transmitting electrodes (21, 22; 26, 27; 31, 32; 36, 37) also carries receiving electrodes (46, 47) which are capacitively coupled to said transmitting electrodes by a set of electrodes (51, 52, 53, 54) on the other (2) of said parts.

6. A method as claimed in any preceding claim wherein there are at least three sets of transmitting electrodes (21, 22; 26, 27; 31, 32; 36, 37).

7. An apparatus for sensing the relative angular position of two relatively rotatable parts (1, 2) comprising generating means arranged to apply an A.C. or pulsed input signal (152, 153, 154, 155) to a radially distributed set of transmitting electrodes (21, 22; 26, 27; 31, 32; 36, 37) on one of said parts, a radially distributed set of electrodes (51, 52, 53, 54) on another of said parts and capacitively coupled to said set of transmitting electrodes to generate an output signal (161, 162, 165, 166), and analysing means connected to said electrodes on said other part and arranged to derive an indication of said relative angular position, characterised in that said parts (1, 2) are relatively axially displaceable, said A.C. or pulsed input signal (152, 153, 154, 155) is applied to at least two sets of transmitting electrodes (21, 22; 26, 27; 31, 32; 36, 37), said transmitting electrodes being relatively displaced in the axial direction and the generating means including means for applying signals (152, 153, 154, 155) of different phase to the respective sets of transmitting electrodes, and said analysing means is arranged to derive from said output signal (161, 162, 165, 166) an indication of the relative axial position as well as the relative angular orientation of the two parts.

8. Apparatus as claimed in claim 7 wherein the width (in the tangential direction) of at least one set of transmitting electrodes (21, 22; 26, 27; 31, 32; 36, 37) varies with length (in the axial direction).

9. Apparatus as claimed in claim 7 wherein said transmitting electrodes (21, 22; 26, 27; 31, 32; 36, 37) are substantially triangular in shape and adjacent pairs of transmitting electrodes form respective rectangular arrays.

10. Apparatus as claimed in any of claims 7 to 9 wherein said width varies sinusoidally with said length.

11. Apparatus as claimed in any of claims 7 to 10 wherein the part (1) which carries said transmitting electrodes (21, 22; 26, 27; 31, 32; 36, 37) also carries receiving electrodes (46, 47) which are capacitively coupled to said transmitting electrodes by a set of electrodes (51, 52, 53, 54) on the other (2) of said parts.

12. Apparatus as claimed in any of claims 7 to 11 wherein there are at least three sets of transmitting electrodes (21, 22; 26, 27; 31, 32; 36, 37).

13. Apparatus as claimed in any of claims 7 to 12 wherein said applied signals differ in phase by 90°.

14. Apparatus as claimed in any of claims 7 to 12 wherein said signals differ in phase by 120°.

**Patentansprüche**

1. Methode zum kapazitiven Abtasten der Relativposition von zwei relativ zueinander drehbaren Teilen (1, 2), mit kapazitivem Koppeln eines AC- oder eines pulsierenden Eingangssignals (152, 153, 154, 155), das an einen radial verteilten Satz von Senderelektroden (21, 22; 26, 27; 31, 32; 36, 37) an einem der Teile angelegt wird, auf einen radial verteilten Satz von Elektroden (51, 52, 53, 54) an dem anderen der Teile, und Analysieren des daraus resultierenden Ausgangssignals (161, 162; 165, 166), dadurch gekennzeichnet, daß die Teile (1, 2) relativ zueinander axial versetzbar sind, das AC- oder das pulsierende Eingangssignal (152, 153, 154, 155) an wenigstens zwei Sätze von Senderelektroden (21, 22; 26, 27; 31, 32; 36, 37) angelegt wird, diese Sätze von Senderelektroden in der Axialrichtung relativ zueinander versetzt sind, und ein Phasenunterschied zwischen den Signalen an den unterschiedlichen Sätzen von Senderelektroden vorhanden ist, und das Ausgangssignal (161, 162, 165, 166) analysiert wird, um die relative Axialposition wie auch die relative Winkelorientierung der beiden Teile zu bestimmen.

2. Methode nach Anspruch 1, bei der die Breite (in der Tangentialrichtung) von wenigstens einem Satz von Senderelektroden (21, 22; 26, 27; 31, 32; 36, 37) mit der Länge (in der Axialrichtung) variiert.

3. Methode nach Anspruch 2, bei der die Senderelektroden (21, 22; 26, 27; 31, 32; 36, 37) im wesentlichen eine dreieckige Form aufweisen und die benachbarten Paare von Senderelektroden jeweils rechteckige Bereiche bilden.

4. Methode nach Anspruch 1, bei der die Breite mit der Länge sinusförmig variiert.

5. Methode nach einem der vorangehenden Ansprüche, bei der der Teil (1), der die Senderelektroden (21, 22; 26, 27; 31, 32; 36, 37) trägt, auch Empfängerelektroden (46, 47) trägt, welche mit den Senderelektroden mithilfe eines Satzes von Elektroden (51, 52, 53, 54) an dem anderen (2) der Teile kapazitiv gekoppelt sind.

6. Methode nach einem der vorangehenden Ansprüche, bei der wenigstens drei Sätze von Senderelektroden (21, 22; 26, 27; 31, 32; 36, 37) vorhanden sind.

7. Vorrichtung zum Abtasten der relativen Winkelposition von zwei relativ zueinander drehbaren Teilen (1, 2), mit Generatormitteln, die zum Anlegen eines AC- oder eines pulsierenden Eingangssignals (152, 153, 154, 155) an einen radial verteilten Satz von Senderelektroden (21, 22; 26, 27; 31, 32; 36, 37) an dem einen der Teile ausgelegt sind, einem radial verteilten Satz von Elektroden (51, 52, 53, 54) an dem anderen der Teile, wobei diese Elektroden (51, 52, 53, 54) mit dem Satz von Senderelektroden kapazitiv gekoppelt sind, um ein Ausgangssignal (161, 162, 165, 166) zu erzeugen, und Analysiermitteln, welche an die Elektroden an dem anderen Teil angeschlossen und zum Ableiten eines Anzeigewertes der relativen Winkelposition ausgelegt sind, dadurch gekennzeichnet, daß die Teile (1, 2) relativ zueinander axial versetzbar sind, das AC- oder das pulsierende Eingangssignal (152, 153, 154, 155) an wenigstens zwei Sätze von Senderelektroden (21, 22; 26, 27; 31, 32; 36, 37) angelegt ist, die Senderelektroden in Axialrichtung relativ zueinander versetzt sind, und die Generatormittel Mittel zum Anlegen von Signalen (152, 153, 154, 155) unterschiedlicher Phase auf die jeweiligen Sätze von Senderelektroden enthalten, und das Analysiermittel zum Ableiten eines Anzeigewertes der relativen Axialposition wie auch der relativen Winkelorientierung der beiden Teile aus dem Ausgangssignal (161, 162, 165, 166) ausgelegt ist.

8. Vorrichtung nach Anspruch 7, bei der die Breite (in der Tangentialrichtung) von wenigstens einem Satz von Senderelektroden (21, 22; 26, 27; 31, 32; 36, 37) mit der Länge (in der Axialrichtung) variiert.

9. Vorrichtung nach Anspruch 7, bei der die Senderelektroden (21, 22; 26, 27; 31, 32; 36, 37) im wesentlichen eine dreieckige Form aufweisen und die benachbarten Paare von Senderelektroden jeweils rechteckige Bereiche bilden.

10. Vorrichtung nach einem der Ansprüche 7 bis 9, bei der die Breite mit der Länge sinusförmig variiert.

11. Vorrichtung nach einem der Ansprüche 7 bis 10, bei der der Teil (1), der die Senderelektroden (21, 22; 26, 27; 31, 32; 36, 37) trägt, auch Empfängerelektroden (46, 47) trägt, welche mit den Senderelektroden mithilfe eines Satzes von Elektroden (51, 52, 53, 54) an dem anderen (2) der Teile kapazitiv gekoppelt sind.

12. Vorrichtung nach einem der Ansprüche 7 bis 11, bei der wenigstens drei Sätze von Senderelektroden (21, 22; 26, 27; 31, 32; 36, 37) vorhanden sind.

13. Vorrichtung nach einem der Ansprüche 7 bis 12, bei der die angelegten Signale in der Phase voneinander um 90° abweichen.

14. Vorrichtung nach einem der Ansprüche 7 bis 12, bei der die Signale in der Phase voneinander um 120° abweichen.

**Revendications**

1. Procédé pour détecter de manière capacitive la position relative de deux pièces pivotantes l'une par rapport à l'autre (1, 2), comportant un couplage capacitif d'un signal d'entrée alternatif ou à impulsions (152, 153, 154, 155) appliqué à un jeu d'électrodes de transmission (21, 22 ; 26, 27 ; 31, 32 ; 36, 37) réparti radialement sur l'une des deux pièces, avec un jeu d'électrodes (51, 52, 53, 54) réparti radialement sur l'autre des deux pièces, et l'analyse du signal de sortie résultant (161, 162, 165, 166), caractérisé en ce que les pièces (1, 2) sont déplaçables axialement l'une par rapport à l'autre, le signal d'entrée alternatif ou à impulsions (152, 153, 154, 155) est appliqué à au moins deux jeux d'électrodes de transmission (21, 22 ; 26, 26 ; 31, 32 ; 36, 37), ces jeux d'électrodes de transmission étant déplacés l'un par rapport à l'autre dans la direction axiale et une différence de phase étant prévue entre les signaux sur les jeux différents d'électrodes de transmission, et le signal de sortie (161, 162, 165, 166) est analysé pour déterminer la position axiale ainsi que l'orientation angulaire des deux pièces l'une par rapport à l'autre.

2. Procédé selon la revendication 1, caractérisé en ce que la largeur (dans la direction tangentielle) d'au moins un jeu d'électrodes de transmission (21, 22 ; 26, 27 ; 31, 32 ; 36, 37) varie avec la longueur (dans la direction axiale).

3. Procédé selon la revendication 2, caractérisé en ce que les électrodes de transmission (21, 22 ; 26, 27 ; 31, 32 ; 36, 37) ont une forme substantiellement triangulaire et les paires voisines d'électrodes de transmission forment respectivement des réseaux rectangulaires.

4. Procédé selon la revendication 1, caractérisé en ce que la largeur varie sinusoïdalement avec la longueur.

5. Procédé selon l'une quelconque des revendications précédentes, caractérisé en ce que la pièce (1) qui porte les électrodes de transmission (21, 22 ; 26, 27 ; 31, 32 ; 36, 37) porte aussi les électrodes de réception (46, 47) qui sont couplées de manière capacitive aux électrodes de transmission par un jeu d'électrodes (51, 52, 53, 54) sur l'autre (2) des deux pièces.

6. Procédé selon l'une quelconque des revendications précédentes, caractérisé en ce qu'il y a au moins trois jeux d'électrodes de transmission (21, 22 ; 26, 27 ; 31, 32 ; 36, 37).

7. Dispositif pour détecter la position angulaire relative de deux pièces pivotantes l'une par rapport à l'autre (1, 2) comportant des moyens de génération agencés pour appliquer un signal d'entrée alternatif ou à impulsions (152, 153, 154, 155) à un jeu d'électrodes de transmission réparti radialement (21, 22 ; 26, 27 ; 31, 32 ; 36, 37) sur l'une des deux pièces, un jeu d'électrodes réparti radialement (51, 52, 53, 54) sur l'autre des deux pièces et couplé de manière capacitive aux jeux d'électrodes de transmission pour engendrer un signal de sortie (161, 162, 165, 166) et des moyens d'analyse connectés aux électrodes sur l'autre pièce et agencés pour en déduire une indication sur la position angulaire relative, caractérisé en ce que les deux pièces (1, 2) sont déplaçables axialement l'une par rapport à l'autre, le signal d'entrée alternatif ou à impulsions (152, 153, 154, 155) est appliqué à au moins deux jeux d'électrodes de transmission (21, 22 ; 26, 27 ;

31, 32 ; 36, 37), les électrodes de transmission étant déplacées l'une par rapport à l'autre dans la direction axiale et les moyens de génération incluant des moyens pour appliquer les signaux (152, 153, 154, 155) de phase différente respectivement aux jeux d'électrodes de transmission, et les moyens d'analyse sont disposés pour déduire à partir du signal de sortie (161, 162, 165, 166) une indication de la position axiale relative ainsi que de l'orientation angulaire relative des deux pièces.

8. Dispositif selon la revendication 7, caractérisé en ce que la largeur (dans la direction tangentielle) d'au moins un jeu d'électrodes de transmission (21, 22 ; 26, 27 ; 31, 32 ; 36, 37) varie avec la longueur (dans la direction axiale).

9. Dispositif selon la revendication 7, caractérisé en ce que les électrodes de transmission (21, 22 ; 26, 27 ; 31, 32 ; 36, 37) sont de forme substantiellement triangulaire et les paires voisines d'électrodes de transmission forment respectivement des réseaux rectangulaires.

10. Dispositif selon l'une quelconque des revendications 7 à 9, caractérisé en ce que la largeur varie de manière sinusoïdale avec la longueur.

11. Dispositif selon l'une quelconque des revendications 7 à 10, caractérisé en ce que la pièce (1) qui porte les électrodes de transmission (21, 22 ; 26, 27 ; 31, 32 ; 36, 37) porte aussi les électrodes de réception (46, 47) lesquelles sont couplées de manière capacitive aux électrodes de transmission au moyen d'un jeu d'électrodes (51, 52, 53, 54) sur l'autre (2) des deux pièces.

12. Dispositif selon l'une quelconque des revendications 7 à 11, caractérisé en ce qu'il y a au moins trois jeux d'électrodes de transmission (21, 22 ; 26, 27 ; 31, 32 ; 36, 37).

13. Dispositif selon l'une quelconque des revendications 7 à 12, caractérisé en ce que les signaux appliqués diffèrent en phase de 90°.

14. Dispositif selon l'une quelconque des revendications 7 à 12, caractérisé en ce que les signaux diffèrent en phase de 120°.

# FIG.1

# FIG.2

## FIG.3

FIG. 4

FIG. 5

# FIG.6

FIG.7

EP 0 435 429 B1

## FIG.8

## FIG.14

25

## FIG.9

## FIG.10

FIG.11

FIG.12

FIG.13

FIG. 15

FIG.16

FIG.17

FIG.18